(19) Europäisches Patentamt
European Patent Office
Office européen des brevets

(11) Veröffentlichungsnummer : **0 124 070**
**B1**

(12) # EUROPÄISCHE PATENTSCHRIFT

(45) Veröffentlichungstag der Patentschrift : **05.04.89**

(51) Int. Cl.[4] : **C 08 G 65/32**, C 08 G 65/26, C 07 C 69/80

(21) Anmeldenummer : **84104607.1**

(22) Anmeldetag : **25.04.84**

(54) **Verfahren zur Herstellung von Polyester- oder Polyether-polyester-polyolen.**

(30) Priorität : **28.04.83 DE 3315381**

(43) Veröffentlichungstag der Anmeldung : **07.11.84 Patentblatt 84/45**

(45) Bekanntmachung des Hinweises auf die Patenterteilung : **05.04.89 Patentblatt 89/14**

(84) Benannte Vertragsstaaten : **BE DE FR GB IT**

(56) Entgegenhaltungen :
**EP--A-- 0 087 517**
**DE--A-- 1 645 339**
**FR--A-- 2 103 529**
**FR--A-- 2 180 122**
**US--A-- 4 144 395**
**US--A-- 4 229 362**
**US--A-- 4 403 093**

(73) Patentinhaber : **BASF Aktiengesellschaft**
**Carl-Bosch-Strasse 38**
**D-6700 Ludwigshafen (DE)**

(72) Erfinder : **Straehle, Wolfgang, Dr.**
**Hirschgasse 20**
**D-6900 Heidelberg (DE)**
Erfinder : **Marx, Matthias, Dr.**
**Seebacher Strasse 49**
**D-6702 Bad Duerkheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 124 070 B1

**Beschreibung**

Zur Herstellung von flammbeständigen Polyurethan-Schaumstoffen finden als eine Aufbaukomponente vielfach Halogen- und Estergruppen enthaltende Polyether-polyole Anwendung.

Nach Angaben der DE-A-19 23 936 (US-A 3 585 185) US-A-3 459 733, US-A-3 639 541 und US-A-3 639 542 werden derartige Polyether-polyester-polyole erhalten durch Umsetzung von gegebenenfalls Phosphorverbindungen als Startermoleküle enthaltenden Polyether-polyolen mit halogenhaltigen Carbonsäureanhydriden, insbesondere Tetrabrom- oder Tetrachlorphthalsäureanhydrid, zu Carbonsäurehalbestern und anschließender Oxalkylierung deren freien Carboxylgruppen.

Zur Herstellung der Carbonsäurehalbester werden gemäß US-A-4 144 395 Trialkylamine als Katalysator verwendet. Durch diese Maßnahme wird die Farbe der Polyether-polyester-polyole verbessert und die Reaktionszeit verkürzt.

Die FR-A-2 180 122 (DE-C-23 18 440) beschreibt eine Klebstoffzusammensetzung, die enthält eine Mischung aus (A) einem Polyurethan-polyol, hergestellt aus einem organischen Diisocyanat, einem Polyether-polyester-glykol und einem niedermolekularen tri- bis octafunktionellen Polyol und (B) einem organischen Polyisocyanat im Gewichtsverhältnis (A) : (B) von 100 : 1 bis 1 : 100.

Nach Angaben der Patentschrift können die als Aufbaukomponenten geeigneten Polyether-polyester-glykole aus Carbonsäureanhydriden und Polyolen und dann durch Oxalkylierung, in Gegenwart von Katalysatoren, wie z. B. Alkalihalogeniden, Alkalicarbonaten, Zinkverbindungen, Ammoniumhalogeniden, tertiären Aminen und Dimethylformamid hergestellt werden, wobei die eingesetzte Katalysatormenge 0,01 bis 5,0 Gew.-%, bezogen auf das Reaktionsgemisch, beträgt. Als bevorzugte Ausführungsform wird in den Beispielen als Katalysator N-Ethylmorpholin verwendet und u. a. wird Triethylendiamin in der Beschreibung aufgezählt.

Die Oxalkylierung wird üblicherweise in Gegenwart von Basen, beispielsweise Alkalihydroxiden oder -alkoholaten, oder Säuren als Katalysator durchgeführt. Nachteilig hierbei ist, daß die Katalysatoren aufgrund ihrer geringen Selektivität nicht nur die Oxalkylierung der Carboxylgruppen, sondern auch die Addition von Alkylenoxiden an die resultierenden oder bereits vorhandenen Hydroxylgruppen der Polyester- oder Polyether-polyole beschleunigen. Um eine vollständige Veresterung aller Carboxylgruppen sicherzustellen, muß daher mit einem großen Überschuß an Alkylenoxiden bei gleichzeitig langer Reaktionsdauer oxalkyliert werden. Nachteilig ist ferner, daß die Katalysatoren nach beendeter Umsetzung wieder aus dem Reaktionsgemisch abgetrennt werden müssen, wozu langwierige und kostspielige Reinigungsoperationen erforderlich sind.

Um eine nachträgliche Reinigung zu vermeiden, wird gemäß EP-A-00468 die Oxalkylierung von chlorhaltigen Phthalsäurehalbestern vorzugsweise in Abwesenheit von Katalystoren durchgeführt. Bei der unkatalysierten Oxalkylierung ist jedoch ebenfalls ein großer Alkylenoxidüberschuß notwendig, um alle Carboxylgruppen zu verestern. Nachteilig ist außerdem, daß die nicht umgesetzten Alkylenoxide, bis zu 15 Gew.% der eingesetzten Menge, abdestilliert und entsorgt werden müssen, was sowohl die Wirtschaftlichkeit dieses Verfahrens als auch dessen Umweltfreundlichkeit in Frage stellt.

Die Herstellung von Polyestern durch Umsetzung von Carbonsäureanhydriden mit Alkyloxiden in Abwesenheit von Wasser und in Gegenwart von Glykolen und Katalysatoren wird in der US-A-3 374 208 beschrieben. Als Katalysatoren werden Metallverbindungen genannt, deren Kationen aus einem Zink-, Zinn-, Mangan-, Blei-, Nickel-, Kobalt- oder Cadmium-ion und Anionen aus Sauerstoff-, Chlor-, Acetat-, Butyrat- Phosphat-, Nitrat-, Stearat-, Oleat- und Naphthenat-ion bestehen.

Bekannt ist außerdem die Veresterung von Carbonsäuren mit Alkylenoxiden in Gegenwart von Katalysatoren, wie z. B. Schwefelsäure, Natriumacetat, Eisen (III)-chlorid u. a. (Methoden der organischen Chemie, Band VIII, Houben-Weyl, Georg Thieme Verlag, Stuttgart, 1952, Seiten 531-533).

Zur Herstellung von Polyurethanen aus organischen Polyisocyanaten und Verbindungen mit reaktiven Wasserstoffatomen werden für verschiedene Anwendungsbereiche Polyester- oder Polyether-polyester-polyole mit hochreaktiven Hydroxylgruppen benötigt. Diese können durch Einführung von primären Hydroxylgruppen, beispielsweise durch Oxethylierung von üblichen Polyether-polyolen hergestellt werden. Hierzu ist jedoch ein großer Ethylenoxidüberschuß erforderlich, der zu hydrophilen Polyoxyethylensegmenten führt, welche den daraus hergestellten Polyurethanen hydrophile Eigenschaften verleihen. Der hydrophile Charakter ist jedoch für wichtige Anwendungsgebiete von Polyether-polyolen, z. B. zur Herstellung von Schaumstoffen, von Nachteil.

Zur Beseitigung dieses Nachteils werden die Carbonsäurehalbester nach der EP-A-0087516 mit einem Mol Alkylenoxid pro Äquivalent Carboxylgruppe in Gegenwart von Thio-dialkylenglykol als Katalysator oxalkyliert. Nach diesem Verfahren werden insbesondere dann sehr gute Ergebnisse erzielt, wenn man zur Herstellung der Carbonsäurehalbester Glutarsäureanhydrid verwendet. Setzt man die Polyole jedoch mit anderen Carbonsäureanhydriden, wie z. B. Tetrahydro- oder Phthalsäureanhydrid, um und oxalkyliert danach die Carbonsäurehalbester, so werden Polyester- oder Polyether-polyester-polyole erhalten, die teilweise nur unter Schwierigkeiten zu Polyurethanen reproduzierbar verarbeitet werden können. Eine Untersuchung dieses Sachverhaltes ergab, daß eine enge Beziehung zwischen den auftretenden Schwierigkeiten und der Bildung der Carbonsäurehalbester besteht, wobei die Carbonsäurehalbesterbildung umso schlechter verläuft, je niedriger die Hydroxylzahl des Polyols, d. h. je größer das Molekulargewicht, ist.

Die Aufgabe der vorliegenden Erfindung bestand nun darin, die genannten Verfahrensmängel zu beseitigen und ein Verfahren zur Herstellung von Polyester- oder Polyether-polyester-polyolen durch katalytische Veresterung zu entwickeln, nach dem die Carbonsäurehalbesterbildung möglichst quantitativ abläuft und durch das die nachfolgende Oxalkylierung nicht negativ beeinflußt wird, sondern möglichst selektiv an der Carboxylgruppe des Halbesters erfolgt.

Diese Aufgabe konnte überraschenderweise gelöst werden durch ein Verfahren zur Herstellung von Polyester- oder Polyether-polyester-polyolen mit einer Säurezahl von kleiner als 1 und einem Gehalt an monomeren Alkylenoxiden von weniger als 1 Gew.-% durch

(a) Katalytische Veresterung von Polyolen mit Carbonsäureanhydriden in Gegenwart von tertiären Aminen zu Carbonsäurehalbestern und anschließender

(b) Katalytischer Oxalkylierung der Carbonsäurehalbester mit Alkylenoxiden in Gegenwart eines Katalysators in einer Menge von 0,05 bis 2,0 Gew.-Teilen pro 100 Gew.-Teilen der Mischung aus Polyol und Carbonsäureanhydrid bzw. dem Carbonsäurehalbester, dadurch gekennzeichnet, daß man die Carbonsäurehalbesterbildung (a) in Gegenwart von N-Methylimidazol und/oder Triethylendiamin und die Oxalkylierung (b) in Gegenwart einer Mischung aus N-Methylimidazol und/oder Triethylendiamin und Triphenylphosphin und/oder Thiodialkylenglykol als Katalysatoren durchführt.

Das neue Verfahren weist den Vorteil auf, daß die erfindungsgemäß verwendeten Katalysatoren N-Methylimidazol und/oder Triethylendiamin nicht nur die Carbonsäurehalbesterbildung katalysieren, sondern auch die Oxalkylierung beschleunigen. Die Wirksamkeit des Katalysators oder Katalysatorsystems ist erkennbar an einer möglichst niedrigen freien Carbonsäureanhydridkonzentration nach der Carbonsäurehalbesterbildung und einer geringen Säurezahl nach der Oxalkylierung, wobei die Hydroxylzahl nahezu den berechneten Wert errreicht. Vorteilhaft ist ferner, daß die Katalysatoren nach der Carbonsäurehalbesterherstellung nicht aus dem Reaktionsgemisch abgetrennt werden müssen, sondern im Gegenteil die Mischung aus N-Methylimidazol und/oder Triethylendiamin und Triphenylphosphin und/oder Thio-dialkylenglykol die Oxalkylierungsreaktion (b) besonders wirksam katalysieren.

Auch nach der Oxalkylierung sind aufwendige Reinigungsverfahren zur Abtrennung der Katalysatoren aus den Polyester- oder Polyether-polyester-polyolen nicht erforderlich.

Das erfindungsgemäße Verfahren kann durch folgende Reaktionsgleichung veranschaulicht werden

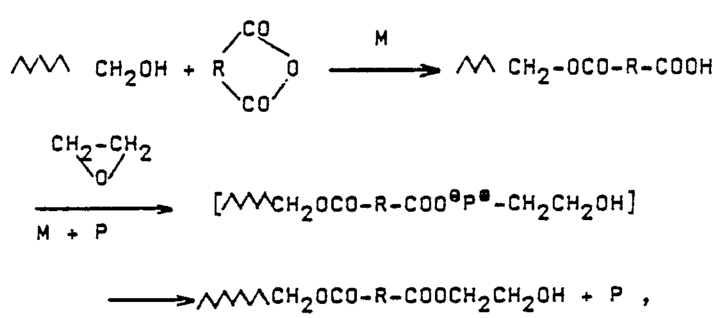


wobei M für N-Methylimidazol und/oder Triethylendiamin und P für Trphenylphosphin und/oder Thiodialkylenglykol stehen.

Zur Herstellung der Polyester- oder Polyether-polyesterpolyole nach dem erfindungsgemäßen Verfahren werden im allgemeinen zunächst aus Polyolen mit 2 bis 6, vorzugsweise 2 bis 3 und insbesondere 2 Hydroxylgruppen oder Polyolgemischen und einem organischen Carbonsäureanhydrid oder -gemisch in Gegenwart von N-Methylimidazol und/oder Triethylendiamin vorzugsweise N-Methylimidazol oder Triethylendiamin, als Katalysator bei Temperaturen von im allgemeinen 50 bis 240 °C, vorzugsweise 90 bis 200 °C, und Reaktionszeiten von im allgemeinen 0,5 bis 8 Stunden, vorzugsweise von 1 bis 4 Stunden, Carbonsäurehalbester (a) hergestellt.

Die Aufbaukomponenten Polyol und Carbonsäureanhydrid werden hierzu in solchen Mengen zur Reaktion gebracht, daß pro Mol Polyol im allgemeinen 1 bis 6 Mole, vorzugsweise ein Mol Carbonsäureanhydrid und pro Äquivalent Anhydridgruppe im allgemeinen 1 bis 6, vorzugsweise 2 Äquivalente, Hydroxylgruppen in der Reaktionsmischung vorliegen. Die Katalysatoren N-Methylimidazol, Triethylendiamin werden in einer Menge von 0,05 bis 2,0 Gew.-Teilen, vorzugsweise 0,1 bis 0,4 Gew.-Teilen, pro 100 Gew.-Teilen der Reaktionsmischung, bestehend aus dem Polyol und Carbonsäureanhydrid, eingesetzt.

Die erhaltenen Carbonsäurehalbester werden danach in Gegenwart von 0,05 bis 2,0 Gew.-Teilen, vorzugsweise 0,1 bis 0,4 Gew.-Teilen, bezogen auf 100 Gew.-Teile Carbonsäurehalbester, N-Methylimidazol und/oder Triethylendiamin und Triphenylphosphin und/oder Thio-dialkylenglykol als Katalysator mit im allgemeinen 1 bis 1,5 Molen Alkylenoxid, vorzugsweise einem Mol Alkylenoxid, pro Äquivalent Carboxylgruppe oxalkyliert (b). Als Oxalkylierungskatalysatoren finden Thio-dialkylenglykol und Triphenylphosphin Verwendung.

Besonders vorteilhafte Ergebnisse werden erzielt, so daß nach dieser Variante insbesondere verfahren wird, wenn man die Carbonsäurehalbesterbildung (a) in Gegenwart von N-Methylimidazol

und/oder Triethylendiamin als Katalysator durchführt und der Reaktionsmischung zur Oxalkylierung (b) zusätzlich Triphenylphosphin einverleibt, so daß eine Katalysatormischung aus N-Methylimidazol und/oder Triethylendiamin und Triphenylphosphin wirksam wird. Die Oxalkylierung wird üblicherweise bei Temperaturen von 80 bis 160 °C, vorzugsweise 90 bis 130 °C, bei Normaldruck oder vorzugsweise unter erhöhtem Druck, z. B. von 0,5 bis 10 bar, vorteilhafterweise in Gegenwart von unter den Reaktionsbedingungen inerten Gasen, wie Stickstoff, Helium, Neon u. a. oder deren Gemischen durchgeführt.

Nach Erreichen einer Säurezahl von kleiner als 1 wird die Oxalkylierung beendet. Sofern die Reaktionsmischung noch freies monomeres Alkylenoxid enthält, wird dieses zweckmäßigerweise unter vermindertem Druck abdestilliert.

Zu den zur Herstellung der Polyester- und/oder Polyether-polyester-polyolen verwendbaren Ausgangskomponenten ist folgendes auszuführen :

Zur Herstellung der Carbonsäurehalbester (a) haben sich als Polyole bewährt 2 bis 6-wertige, vorzugsweise 2- und 3-wertige Alkohole mit Molekulargewichten von 62 bis 350, vorzugsweise von 62 bis 140, wie z. B. Ethylen-, 1,3- bzw. 1,2-Propylen-, 1,4-Butylen-, Diethylen-, Dipropylenglykol, 1,3-Pentan-, 1,5-Pentan-, 1,6-Hexan-, 1,7-Heptandiol, Glycerin, 1,1,1-Trimethylolpropan, 1,1,1-Trimethylolethan, Hexan-1,2,6-triol alpha-Methylglucosid, Pentaerythrit und Sorbitol. Vorzugsweise verwendet werden jedoch di- bis hexafunktionelle und insbesondere di- und/oder trifunktionelle Polyetherole mit Hydroxylzahlen von 15 bis 250 und vorzugsweise von 30 bis 110. Die Polyetherole können ihrerseits beispielsweise hergestellt werden durch Polyaddition von Alkylenoxiden, wie z. B. 1,2- oder 2,3-Butylenoxid, 1,3-Propylenoxid oder vorzugsweise Ethylenoxid und/oder 1,2-Propylenoxid an übliche Startermoleküle, beispielsweise die oben genannten Alkohole, in Gegenwart von sauren oder vorzugsweise basischen Katalysatoren oder durch Polymerisation von Tetrahydrofuran mit bekannten Katalysatoren, wie z. B. Borfluoridetherat, Antimonpentachlorid oder Bleicherde. Die Polyole können einzeln oder in Form von Mischungen eingesetzt werden. Vorzugsweise verwendet werden Polypropylenether-glykole mit Molekulargewichten von 500 bis 3 000.

Als Carbonsäureanhydride eignen sich gegebenenfalls halogensubstituierte aliphatische Monoanhydride, gegebenenfalls substituierte cycloaliphatische Di- und/oder Monoanhydride und gegebenenfalls substituierte aromatische Di- und/oder vorzugsweise aromatische Monoanhydride. Im einzelnen seien beispielhaft genannt : aliphatische Carbonsäureanhydride, wie z. B. Maleinsäure-, Dichlormaleinsäure-, Bernsteinsäure- und Glutarsäureanhydrid, cycloaliphatische Carbonsäureanhydride, wie z. B. Hexahydro- und Tetrahydrophthalsäureanhydrid und aromatische Carbonsäureanhydride, wie z. B. Tetrachlorphthalsäure-, Tetrabromphthalsäure-, Trimellithsäureanhydrid, Pyromellithsäuredianhydrid und vorzugsweise Phthalsäureanhydrid.

Wie bereits dargelegt, können als Katalysatoren zur Oxalkylierung der Carboxylgruppen der Carbonsäurehalbester Thio-dialkylenglykole verwendet werden. Bewährt haben sich beispielsweise Thiodialkylenglykol mit 2 bis 6, vorzugsweise 2 bis 3 Kohlenstoffatomen im Alkylenrest. Beispielhaft genannt seien Thio-dihexylenglykol, Thio-dibutylenglykol und vorzugsweise Thio-dipropylen- und/oder Thio-diethylenglykol.

Zur Oxalkylierung der Carboxylgruppen der Carbonsäurehalbester eignen sich gegebenenfalls mit Alkoxygruppen oder Halogenatomen substituierte Alkylenoxide oder Alkylenoxidmischungen, wie z. B. Ethylenoxid, 1,2-Propylenoxid, Butylenoxide, Hexylenoxide, Octylenoxide, Dodecylenoxide, Methoxy- oder Ethoxypropylenoxid-1,2, 3-Chlor-propylenoxid-1,2, 3,3-Di-chlor-propylenoxid-1,2 und Cyclohexenoxid. Vorzugsweise verwendet werden 1,2-Propylenoxid, Mischungen aus 1,2-Propylenoxid und Ethylenoxid und insbesondere Ethylenoxid.

Die nach dem erfindungsgemäßen Verfahren hergestellten Polyester- oder Polyether-polyester-polyole besitzen eine Säurezahl von kleiner als 1 und einen Gehalt an monomeren Alkylenoxiden von weniger als 1 Gew.-%.

Die Polyester- und Polyether-polyester-polyole sind wertvolle Hilfsmittel und Zwischenprodukte. Die Polyether-polyester-polyole finden insbesondere Verwendung zur Herstellung von Polyurethankunststoffen.

## Beispiele 1 bis 3 und Vergleichsbeispiele 1 bis 7

### Allgemeine Herstellungsvorschrift

In einem für Oxalkylierungen geeigneten Reaktor wurden unter Rühren in einer Stickstoffatmosphäre ein Mol eines trifunktionellen Polyetherols mit einer Hydroxylzahl von 43, hergestellt unter Verwendung von Glycerin als Startermolekül und einer Ethylenoxid-1,2-propylenoxidmischung und 3 Mol Carbonsäureanhydrid in Gegenwart des Katalysators (a) auf 180 °C erhitzt und bei dieser Temperatur 4 Stunden lang verestert. Nach dieser Zeit wurde eine Probe zur Bestimmung des freien Carbonsäureanhydridgehaltes entnommen.

Die erhaltene Polyether-Carbonsäurehalbester-Mischung wurde danach bei einer Temperatur von 105 °C und einem Stickstoffanfangsdruck von 2 bar in Gegenwart der Katalysatoren (a) und (b) mit 3 Molen Alkylenoxid oxalkyliert. Nach Abreaktion des Alkylenoxids wurden von der Reaktionsmischung die

flüchtigen Bestandteile bei einer Temperatur von maximal 120 °C und einem Druck von 0,5 bar abdestilliert und die Säure- und Hydroxylzahl an den erhaltenen Polyether-polyester-polyolen bestimmt.

Die verwendeten Carbonsäureanhydride, Katalysatoren (a) und (b) und Alkylenoxide sowie die ermittelten analytischen Ergebnisse sind in den Tabellen 1 und 2 zusammengefaßt.

Beispiele 4 und 5

Allgemeine Herstellungsvorschrift

In einem für Oxalkylierungen geeigneten Reaktor wurden unter Rühren in einer Stickstoffatmosphäre ein Mol eines trifunktionellen Polyetherols mit einer Hydroxylzahl von 56, hergestellt unter Verwendung von Glycerin als Startermolekül und einer Ethylenoxid-1,2-propylenoxidmischung sowie anschließender Ethoxylierung des abreagierten Reaktionsgemisches und 2,7 Mol Carbonsäureanhydrid in Gegenwart des Katalysators (a) auf 180 °C erhitzt und bei dieser Temperatur 4 Stunden lang verestert. Nach dieser Zeit wurde eine Probe zur Bestimmung des freien Carbonsäureanhydridgehaltes entnommen.

Die erhaltene Polyether-Carbonsäurehalbester-Mischung wurde analog den Angaben der Beispiele 1 bis 4 oxalkyliert.

Die verwendeten Aufbaukomponenten und Katalysatoren (a) und (b) sowie die ermittelten analytischen Ergebnisse sind in Tabelle 1 zusammengefaßt.

Tabelle 1, Beispiele 1-5 und Vergleichsbeispiel 1

| Beispiel | Carbonsäure anhydrid | Katalysator (a) 0,2 Gew.-%* | freier Anhydridgehalt Gew.-%* | Alkylenoxid | Katalysator (b) 0,2 Gew.-* | Säurezahl | OH-Zahl best. | OH-Zahl ber. |
|---|---|---|---|---|---|---|---|---|
| 1 (Vergl.) | Phthalsäureanhydrid | N-Methylimidazol | 1,3 | Ethylenoxid | - | 0,7 | 41 | 36 |
| 1 | " | " | 1,3 | " | Thio-diethylenglykol | 0,2 | 41 | 36 |
| 2 | " | " | 1,1 | " | Triphenylphosphin | 0,6 | 38 | 36 |
| 3 | Tetrahydrophthalsäureanhydrid | " | 0,4 | " | Thiodiethylenglykol | 0,4 | 42 | 37 |
| 4 | Phthalsäureanhydrid | " | 1,1 | " | Triphenylphosphin | 0,4 | 47 | 47 |
| 5 | " | Triethylendiamin | 0,8 | " | " | 0,4 | 49 | 47 |

* bezogen auf das Gewicht der Mischung aus Polyetherol und Carbonsäureanhydrid

Tabelle 2, Vergleichsbeispiele 2-7

| Vergleichsbeispiel | Carbonsäure anhydrid | Katalysator (a) 0,2 Gew.-%* | freier Anhydridgehalt Gew.-%* | Alkylenoxid | Katalysator (b) 0,2 Gew.-* | Säurezahl | OH-Zahl best. | OH-Zahl ber. |
|---|---|---|---|---|---|---|---|---|
| 2 | Phthalsäureanhydrid | Acetylacetonat | 2,9 | Ethylenoxid | Thio-diethylenglykol | 3 | 43 | 36 |
| 3 | " | Magnesiumacetylacetonat | 3,2 | " | - | 24 | 17 | 36 |
| 4 | " | " | 3,2 | " | Thio-diethylenglykol | 8,0 | 44 | 36 |
| 5 | " | Calciumnaphthenat | 2,6 | " | " | 6,0 | 35 | 36 |
| 6 | " | Zinknaphthenat | 2,3 | " | " | 13 | 31 | 36 |
| 7 | " | Zinn-(II)-octoat | 1,8 | " | " | 2,0 | 43 | 36 |

* bezogen auf das Gewicht der Mischung aus Polyetherol und Carbonsäureanhydrid

**Patentansprüche**

1. Verfahren zur Herstellung von Polyester- oder Polyether-polyesterpolyolen mit einer Säurezahl von kleiner als 1 und einem Gehalt an monomeren Alkylenoxiden von weniger als 1 Gew.-% durch

(a) Katalytische Veresterung von Polyolen mit Carbonsäureanhydriden in Gegenwart von tertiären Aminen zu Carbonsäurehalbestern und anschließende

(b) Katalytische Oxalkylierung der Carbonsäurehalbester mit Alkylenoxiden in Gegenwart eines Katalysators in einer Menge von 0,05 bis 2,0 Gew.-Teilen pro 100 Gew.-Teilen der Mischung aus Polyol und Carbonsäureanhydrid bzw. dem Carbonsäurehalbester

dadurch gekennzeichnet, daß man die Carbonsäurehalbesterbildung (a) in Gegenwart von N-Methylimidazol und/oder Triethylendiamin und die Oxalkylierung (b) in Gegenwart einer Mischung aus N-Methylimidazol und/oder Triethylendiamin und Triphenylphosphin und/oder Thiodialkylenglykol als Katalysatoren durchführt.

2. Verfahren nach Anspruch 1, dadurch gekennzeichnet, daß man als Polyole di- bis hexafunktionelle Polyetherole mit Hydroxylzahlen von 15 bis 250 verwendet.

3. Verfahren nach Anspruch 1, dadurch gekennzeichnet, daß man als Carbonsäureanhydrid Phthalsäureanhydrid verwendet.

4. Verfahren nach Anspruch 1, dadurch gekennzeichnet, daß man als Alkylenoxid Ethylenoxid verwendet.

5. Verfahren nach Anspruch 1, dadurch gekennzeichnet, daß man zur Herstellung der Carbonsäurehalbester (a) ein Mol Polyol mit 1 bis 6 Molen Carbonsäureanhydrid verestert mit der Maßgabe, daß pro Äquivalent Anhydridgruppe 1 bis 6 Äquivalente Hydroxylgruppen in der Reaktionsmischung vorliegen.

6. Verfahren nach Anspruch 1, dadurch gekennzeichnet, daß man zur Oxalkylierung (b) der Carbonsäurehalbester pro Carboxylgruppe ein Mol Alkylenoxid verwendet.

**Claims**

1. A process for preparing a polyester- or polyether-polyester polyol having an acid number of less than 1 and a monomeric alkylene oxide content of less than 1 % by weight by

a) catalytic esterification of a polyol with a carboxylic anhydride in the presence of a tertiary amine to give a carboxylic monoester and subsequent

b) catalytic alkoxylation of said carboxylic monoester with an alkylene oxide in the presence of a catalyst in an amount of from 0.05 to 2.0 parts by weight per 100 parts by weight of the mixture of polyol and carboxylic anhydride or carboxylic monoester,

which comprises performing the carboxylic monoester formation (a) in the presence of N-methylimidazole or triethylenediamine and the alkoxylation (b) in the presence of a mixture of N-methylimidazole or triethylenediamine and triphenylphospine or a thiodialkylene glycol as catalysts.

2. A process as claimed in claim 1, wherein the polyol used is a di-, tri-, tetra-, penta- or hexafunctional polyetherol having a hydroxyl number of from 15 to 250.

3. A process as claimed in claim 1, wherein the carboxylic anhydride used is phthalic anhydride.

4. A process as claimed in claim 1, wherein the alkylene oxide used is ethylene oxide.

5. A process as claimed in claim 1, wherein to prepare the carboxylic monoester (a) one mole of polyol is esterified with from 1 to 6 moles of carboxylic anhydride, with the proviso that per equivalent of anhydride group from 1 to 6 equivalents of hydroxyl groups are present in the reaction mixture.

6. A process as claimed in claim 1, wherein for the alkoxylation (b) of the carboxylic monester one mole of alkylene oxide is used per carboxyl group.

**Revendications**

1. Procédé de préparation de polyester- ou de polyéther-polyester-polyols d'un indice d'acide inférieur à 1 et avec une teneur en oxydes d'alkylène monomères inférieure à 1 % en poids par :

(a) une estérification catalysée de polyols par des anhydrides d'acides carboxyliques, en présence d'amines tertiaires, en hémi-esters d'acides carboxyliques, suivie de

(b) une oxalkylation catalysée de ces hémi-esters par des oxydes d'alkylène en présence d'un catalyseur en une proportion de 0,05 à 2,0 parties en poids pour 100 parties en poids du mélange polyol - anhydride carboxylique ou de l'hémi-ester,

caractérisé en ce que les catalyseurs pour la formation d'hémi-ester (a) sont choisis parmi le N-méthylimidazole et(ou) la triéthylène-diamine et pour l'oxalkylation (b) parmi les mélanges de N-méthylimidazole et de triéthylène-diamine ou de triphényl-phosphine et(ou) de thio-dialkylène-glycol.

2. Procédé suivant la revendication 1, caractérisé en ce que les polyols sont choisis parmi les polyétherols di- à hexa-fonctionnels avec des indices d'hydroxyle de 15 à 250.

3. Procédé suivant la revendication 1, caractérisé en ce que l'anhydride d'acide carboxylique est l'anhydride phtalique.

4. Procédé suivant la revendication 1, caractérisé en ce que l'oxyde d'alkylène est l'oxyde d'éthylène.

5. Procédé suivant la revendication 1, caractérisé en ce que la formation des hémi-esters d'acides carboxyliques (a) est réalisée par l'estérification de 1 mole de polyol par 1 à 6 moles d'anhydride carboxylique, étant entendu que pour chaque équivalent de groupe anhydride, le mélange réactionnel contienne entre 1 et 6 équivalents de groupes hydroxyle.

6. Procédé suivant la revendication 1, caractérisé en ce que, pour l'oxalkylation (b) des hémi-esters d'acides carboxyliques, on met en œuvre 1 mole d'oxyde d'alkylène par groupe carboxyle.